# EUROPEAN PATENT SPECIFICATION

(11) **EP 0 916 830 B1**
(45) Date of publication and mention of the grant of the patent: **12.01.2005**
(21) Application number: 98121706.0
(22) Date of filing: 13.11.1998
(51) Int. Cl.: F02D 41/40

(54) **Pilot injection control apparatus for an internal combustion engine**
Vorrichtung zur Regelung der Voreinspritzung in einer Brennkraftmaschine
Dispositif de commande d'injection pilote pour un moteur à combustion interne

(30) Priority: 14.11.1997 JP 31351297
(43) Date of publication of application: 19.05.1999
(60) Divisional application: 04009970.7
(73) Proprietor: TOYOTA JIDOSHA KABUSHIKI KAISHA, Toyota-shi, Aichi-ken 471-8571 (JP)
(72) Inventor: Negishi, Akiyoshi, Toyota Jidosha Kabushiki Kaisha, Toyota-shi, Aichi-ken, 471-8571 (JP)
(74) Representative: Leson, Thomas Johannes Alois, Dipl.-Ing.

(56) References cited:
- EP-A- 0 570 986
- EP-A- 0 812 981
- JP-A- 62 000 659
- US-A- 4 841 936
- PATENT ABSTRACTS OF JAPAN vol. 1998, no. 01, 30 January 1998 (1998-01-30) -& JP 09 228880 A (NISSAN MOTOR CO LTD), 2 September 1997 (1997-09-02) -& DATABASE WPI Week 9745 Derwent Publications Ltd., London, GB; AN 1997-487555 [45] XP002143765
- PATENT ABSTRACTS OF JAPAN vol. 013, no. 418 (M-871), 18 September 1989 (1989-09-18) & JP 01 155053 A (MAZDA MOTOR CORP), 16 June 1989 (1989-06-16)
- PATENT ABSTRACTS OF JAPAN vol. 011, no. 250 (M-616), 14 August 1987 (1987-08-14) & JP 62 058034 A (TOYOTA MOTOR CORP), 13 March 1987 (1987-03-13)

## Description

### BACKGROUND OF THE INVENTION

The present invention generally relates to a pilot injection control apparatus for an internal combustion engine according to the preamble of claim 1, and more particularly to a pilot injection control apparatus for an internal combustion engine that varies or discontinues the pilot injection depending on the current conditions.

Various fuel injection control apparatuses for reducing noise during fuel combustion of internal combustion engines, especially diesel engines, have been developed. For example, in a technology known as pilot injection, a small amount of fuel is injected into the combustion chamber prior to the main injection of fuel. With this technology, the injected fuel is smoothly combusted in the combustion chamber without ignition lag. Ignition lag causes explosive combustion of the injected fuel, resulting in increased noise. However, the pilot injection will prevent the noise caused by ignition lag. Furthermore, the amount of nitrogen oxide (NOx) in the exhaust gas is reduced by the pilot injection.

Pilot injection is disclosed, for example, in JP-A-62-58034 and JP-A-1-155053. The former teaches increasing the amount of fuel to be injected during the pilot injection if the engine is cold, to avoid ignition lag. The latter teaches lengthening time interval (pilot interval) between the pilot injection and the main injection to increase the effect of the pilot injection if the engine is cold, to avoid the ignition lag. More specifically, as the temperature of the engine gets lower, the time of the pilot injection is set further ahead of the time of the main injection.

In general, as the intake pressure increases, the density of the intake air is increased. Therefore, the temperature of the air in the compression chamber will reach a relatively high temperature as the air in the compression chamber is compressed by a piston. Injected fuel is more easily ignited as the temperature of the combustion chamber increases as the piston approaches top dead center. Higher temperatures result in shorter ignition lag. Therefore, a high intake pressure can reduce the possibility of ignition lag without necessitating the pilot injection.

However, in the apparatuses disclosed in both JP-A-62-58034 and JP-A-1-155053, the pilot injection is conducted without taking the intake pressure into consideration. In another words, even if the intake pressure is high enough to prevent ignition lag, the pilot injection is still conducted. Thus, there are no benefits to offset negative effects of the pilot injection. More specifically, the timing of the main injection is determined based on the running condition of the engine to optimize engine power and fuel consumption. Therefore, if the pilot injection occurs prior to the main injection, the pilot injection has negative effects on the engine power and fuel consumption.

In the apparatus of JP-A-62-58034, if the amount of fuel to be injected during the pilot injection is increased while the intake pressure is high, the negative effects of the pilot injection are increased. Furthermore, if the amount of fuel to be injected during the pilot injection is increased, the amount of air in the compression chamber necessary for combustion of the pilot fuel is increased. As a result, there is a shortage of air available for combustion of the main fuel, which is injected during the main injection. This will cause incomplete combustion of the main fuel, and the amount of smoke in the exhaust gas will increase.

Likewise in the apparatus of JP-A-1-155053, if the pilot interval is lengthened while the intake pressure is high, the negative effects of the pilot injection are increased. That is, since the pilot injection will be conducted at an earlier stage of the compression stroke, the engine power will decrease, and fuel consumption will increase.

A generic fuel injection control apparatus for an engine is known from EP-A-0 570 986. The apparatus comprises an injector for injecting fuel into a combustion chamber of the engine and a control means for controlling the injector to conduct a pilot injection of fuel prior to a main injection of fuel. The pilot injection amount is described to be corrected according to - inter alia - an intake pressure.

A further fuel injection control apparatus for an engine is known from JP-A-09 228 880. In this document, it is described to control the pilot injection amount according to an intake air quantity.

### SUMMARY OF THE INVENTION

It is an object of the present invention to further develop a fuel injection control apparatus for an engine according to the preamble of claim 1 such that an amount of nitrogen oxide in the exhaust gas is reduced.

According to the invention, this object is achieved by a fuel injection control apparatus for an engine having the features of claim 1.

Advantageous further developments are set out in the dependent claims.

According to the present invention, the pilot injection control apparatus is improved to conduct more advantageous pilot injection.

The apparatus includes an injector for injecting fuel into a combustion chamber of the engine and a controller for controlling the injector to conduct pilot injection of fuel prior to the main injection of fuel. The controller controls the injector to increase the effect of the pilot injection as the intake air pressure decreases.

Other aspects and advantages of the present invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objectives and advantages thereof, may best be understood by reference to the following description of the presently preferred embodiments together with the accompanying drawings in which:
Fig. 1 is a schematic view of a pilot injection control apparatus for a diesel engine in accordance with a first embodiment not claimed per se;
Fig. 2(a) is a longitudinal cross sectional view of an injector while a solenoid is demagnetized;
Fig. 2(b) is a longitudinal cross sectional view of the injector during non-effective fuel injection period;
Fig. 2(c) is a longitudinal cross sectional view of the injector while fuel is injected;
Fig. 3 is a block diagram, showing an electrical construction of the control apparatus of Fig. 1;
Fig. 4 is a flow chart, showing a pilot injection amount control routine that is performed by an electronic control unit (ECU);
Fig. 5 is a map, showing an intake pressure correction factor relative to the intake pressure;
Fig. 6 is a flow chart, showing a pilot interval control routine that is performed by the ECU in a second embodiment not claimed per se;
Fig. 7 is a map, showing an intake pressure correction factor relative to the intake pressure;
Fig. 8 is a flow chart, showing a pilot injection execution control, routine that is performed by the ECU in a comparative example not claimed;
Fig. 9 is a map, showing a pilot injection execution area relative to the engine speed and the intake pressure;
Fig. 10 is a flow chart, showing a pilot injection execution control routine that is performed by the ECU in a comparative example not claimed;
Fig. 11 is a map, showing the basic pilot injection amount relative to the engine speed and the target fuel injection amount; and
Fig. 12 is a graph, showing a pilot injection execution area relative to the engine speed and the intake pressure.

### DETAILED DESCRIPTION OF THE PREFERRED EMBODIMENTS

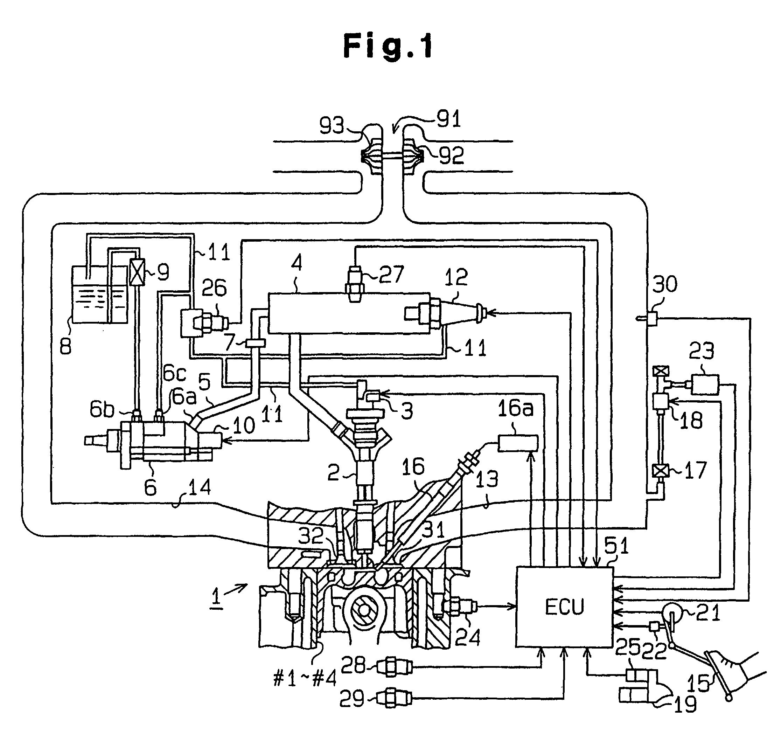

A pilot injection control apparatus for a diesel engine in accordance with a first embodiment of the present invention not claimed per se will be described with reference to Figs. 1 to 5. As shown in Fig. 1, the diesel engine 1 of the illustrated embodiment has four cylinders #1-#4. An injector 2 is provided for each cylinder #1-#4. Fuel is injected from each injector 2 into a combustion chamber of the corresponding cylinder #1-#4. The fuel injection from each injector 2 is conducted based on the ON/OFF state of an electromagnetic valve 3, which is provided in the injector 2.

The injector 2 is connected to a common rail 4, which forms a pressure accumulator. While the electromagnetic valve 3 is opened, fuel in the common rail 4 is injected from the injector 3 into the corresponding cylinder #1-#4. The common rail 4 must maintain a relatively high pressure that corresponds to the fuel injection pressure. This is especially important during cranking of the engine 1. Because of this, the common rail 4 is connected to a discharge port 6a of a supply pump 6 with a supply pipe 5. Also, a check valve 7 is provided in the supply pipe 5. The check valve 7 allows fuel to flow from the supply pump 6 to the common rail 4 and prevents back flow of fuel from the common rail 4 to the supply pump 6.

The supply pump 6 is connected to a fuel tank 8 with a pipe extending from a suction port 6b. A filter 9 is provided in the pipe between the supply pump 6 and the fuel tank 8, thus the supply pump 6 receives fuel from the fuel tank 8 through the filter 9. The supply pump 6 includes a cam (not shown), which is driven consistently with rotation of the diesel engine 1, and a plunger (not shown), which is reciprocated by the cam. The supply pump 6 supplies pressurized fuel, which has been pressurized to a required pressure by the plunger, to the common rail 4.

A pressure control valve 10 is provided near the discharge port 6a of the supply pump 6. The pressure control valve 10 controls the pressure of the fuel discharged from the discharge port 6a to the common rail 4. The pressure control valve 10 is closed in accordance with an ON-signal from an electronic control unit (ECU) 51, the details of which will be explained later, to allow fuel to flow from the discharge port 6a to the common rail 4. The pressure control valve 10 is opened in accordance with an OFF-signal from the ECU 51 to allow fuel to flow from a return port 6c of the supply pump 6 to the fuel tank 8 via a return pipe 11.

A relief valve 12 is provided in the common rail 4. If a predetermined condition is met, the relief valve 12 is opened to allow return flow of the pressurized fuel in the common rail 4 to the fuel tank 8 via the return pipe 11, so that the pressure in the common rail 4 is decreased.

For a while after the electromagnetic valve 3 is activated for fuel injection, the injector 2 does not inject fuel and returns fuel to the fuel tank 8 via the return pipe 11 to decrease the pressure of fuel in the common rail 4. This period of time, during which fuel is not injected from the injector 2 even though the electromagnetic valve 3 is activated for fuel injection, is called the "ineffective injection period". The injector 2 injects a small amount of fuel (pilot injection) into the combustion chamber of the respective cylinder #1-#4 prior to injection of the main fuel (main injection).

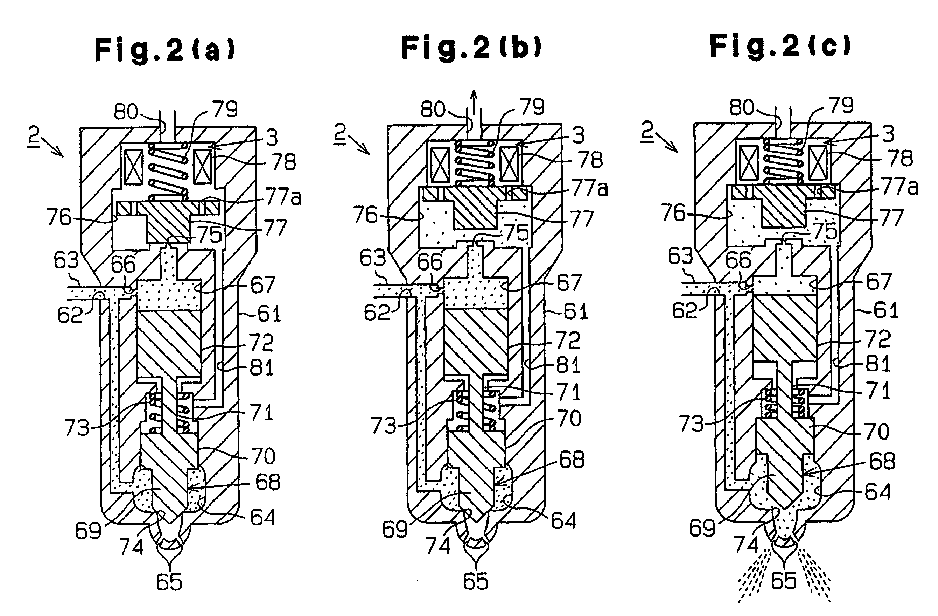

Constructional details of the injector 2 will now be described. As shown in Fig. 2(a), a supply port 62 is provided in a casing of the injector 2. Fuel in the common rail 4 is conducted through a supply pipe 63 to a lower reservoir chamber 64, which is defined in a lower part of the casing 61. Nozzle holes 65, which can be communicated with the lower reservoir chamber 64, are formed in a bottom surface of the casing 61. The supply port 62 is connected to an upper reservoir chamber 67 through an orifice 66. A nozzle needle 68 is slidably received in both the lower reservoir chamber 64 and the upper reservoir chamber 67.

The nozzle needle 68 includes a distal end section 69, a large diameter section 70, a small diameter section 71 and a piston section 72, which are arranged sequentially from the lower end to the upper end of the nozzle needle 68. The large diameter section 70 slides within the lower reservoir chamber 64, and the piston section 72 slides within the upper reservoir chamber 67. A spring 73 is arranged around the small diameter section 71. The spring 73 urges the nozzle needle 68 toward the nozzle holes 65. Therefore, the distal end section 69 of the nozzle needle 68 is normally seated on a valve seat 74 near the nozzle holes 65.

The upper reservoir chamber 67 is communicated with a receiving chamber 76 through an orifice 75. The electromagnetic valve 3 is located in the receiving chamber 76. The electromagnetic valve 3 includes a valve element 77, a solenoid 78 and a spring 79. The spring 79 is arranged between the top surface of the valve element 77 and the ceiling of the receiving chamber 76 to urge the valve element 77 against the orifice 75. Therefore, the orifice 75 is normally closed by the valve element 77 to disconnect the upper reservoir chamber 67 from the receiving chamber 76. When the solenoid 78 is magnetized, the solenoid 78 moves the valve element 77 away from the orifice 75 against the urging force of the spring 79. The valve element 77 has an upper flange, and through holes 77a are formed in the flange. A return port 80 for releasing fuel from the receiving chamber 76 is formed in the casing 61. Under a predetermined condition, as described below, fuel will be returned from the return port 80 to the fuel tank 8 through the return pipe 11 (Fig. 1).

A spring accommodating space, which accommodates the spring 73, and the receiving chamber 76 are communicated through a connecting passage 81. Therefore, fuel, which is leaked from the spring accommodating space, flows into the receiving chamber 76 through the connecting passage 81.

Operation of the injector 2 will now be described. As shown in Fig. 2(a), while the solenoid 78 is demagnetized, the valve element 77, which is urged by the spring 79, closes the orifice 75, so that the upper reservoir chamber 67 and the receiving chamber 76 are disconnected from each other. Therefore, fuel from the supply port 62 is equally distributed between the lower reservoir chamber 64 and the upper reservoir chamber 67 to keep a pressure balance between the lower reservoir chamber 64 and the upper reservoir chamber 67. As a result, the distal end section 69 of the nozzle needle 68 is seated on the valve seat 74 by the urging force of the spring 73, so that fuel is not injected from the nozzle holes 65. Furthermore, fuel in the upper reservoir chamber 67 does not flow into the return port 80 via the receiving chamber 76.

As shown in Fig. 2(b), when the solenoid 78 is magnetized, the valve element 77 moves away from the orifice 75 against the urging force of the spring 79, so that the upper reservoir chamber 67 and the receiving chamber 76 are communicated with each other. As a result, fuel in the upper reservoir chamber 67 flows into the return port 80 through the orifice 75, the receiving chamber 76 and the through holes 77a, and then returns to the fuel tank 8 via the return pipe 11. As fuel flows out of the upper reservoir chamber 67, the fuel pressure in the upper reservoir chamber 67 is reduced. However, as long as the pressure difference between the fuel in the lower reservoir chamber 64 and the fuel in the upper reservoir chamber 67 applies a force to the needle 68 that is smaller than the urging force of the spring 73, the distal end section 69 of the nozzle needle 68 remains seated on the valve seat 74. Therefore, for a while after the solenoid 78 is activated for fuel injection, fuel is not injected from the nozzle holes 65, and the fuel flows out of the upper reservoir chamber 67 through the return port 80. This period of time, during which fuel is not injected after activation of the solenoid 78, is the above described ineffective injection period.

As fuel in the upper reservoir chamber 67 continues to flow out, the pressure difference between the fuel in the lower reservoir chamber 64 and the fuel in the upper reservoir chamber 67 applies a force to the needle 68 that is greater than the urging force of the spring 73, and the nozzle needle 68 moves away from the valve seat 74 by the force of the fuel pressure in the lower reservoir chamber 64, as shown in Fig. 2(c). Therefore, the lower reservoir chamber 64 is communicated with the nozzle holes 65, so that pressurized fuel is injected from the nozzle holes 65.

Thereafter, when the solenoid 78 is demagnetized, the injector 2 is positioned in the position of Fig. 2(a) again, so that the fuel injection is terminated. As a result, if the magnetization period of the solenoid 78 is shorter than the ineffective injection period, the injector 2 does not move from the position of Fig. 2(b) to the position of the Fig. 2(c). That is, fuel is not injected, and the fuel flows out the upper reservoir chamber 67 through the return port 80. In order to conduct the pilot injection, the magnetization period of the solenoid 78 is set slightly longer than the ineffective injection period, so that a small amount of fuel is injected. In order to conduct the main injection, the magnetization period of the solenoid 78 is set much longer than the ineffective injection period, so that the amount of fuel required for the main injection is injected.

As shown in Fig. 1, an intake passage 13 and a discharge passage 14 are connected to the combustion chamber of each cylinder #1-#4. A throttle valve (not shown) is provided in the intake passage 13. The flow of the intake air into the combustion chamber is regulated by opening and closing the throttle valve.

A supercharger such as a turbocharger 91 is provided to increase the pressure of the intake air. The turbocharger 91 includes a compressor 92, which is arranged in the intake passage 13, and a turbine 93, which is arranged in the discharge passage 14. As is known, the turbine 93 of the turbocharger 91 is rotated by the exhaust gas, and the compressor 92, which is coaxially arranged with the turbine 93, is rotated to increase pressure of the intake air. Therefore, dense air is supplied to the combustion chamber to promote fuel combustion and increase the power of the diesel engine 1.

A glow plug 16 is arranged in each combustion chamber. The glow plug 16 is heated by an electric current supplied to a glow relay 16a just before cranking the engine 1. Ignition and combustion of fuel during the cranking of the engine 1 are promoted by injecting fuel from the injector 2 to the heated glow plug 16.

A various sensors are provided in the diesel engine 1 for measuring the running conditions of the engine 1. For example, a gas pedal sensor 21, which measures the degree of the depression amount ACCP of the gas pedal 15, is arranged near the gas pedal 15. A complete closure switch 22 is arranged near the gas pedal sensor 21. The complete closure switch 22 outputs a complete closure signal while the gas pedal 15 is not depressed.

An intake pressure sensor 23 is connected to the intake passage 13 via a filter 17 and a vacuum switching valve (VSV) 18. The intake pressure sensor 23 measures the pressure (intake pressure) of air in the intake passage 13. An intake temperature sensor 30 for measuring the intake temperature THA is provided in the intake passage 13. A coolant temperature sensor 24 is arranged in a cylinder block of the engine 1. The coolant temperature sensor 24 measures the temperature (coolant temperature) THW of the coolant, which flows within the cylinder block of the engine 1.

The diesel engine is installed in a vehicle (not shown). A starter 19 for cranking the diesel engine 1 is provided. The starter 19 includes a starter switch 25, which detects activation of the starter 19. Furthermore, a key switch (not shown) is provided in the vehicle. The key switch can be switched among an OFF-position, an ON-position and a start position. For cranking the engine 1, the key switch is turned from the OFF-position to the start position for activating the starter 19. The starter switch 25 outputs a starter signal STA to the ECU 51 only when the starter 19 is activated, or the engine 1 is cranking. After the engine 1 is started, the key switch is turned to the ON-position, and the engine 1 is operated in an ordinary manner.

A fuel temperature sensor 26 for measuring the fuel temperature THF is arranged in the return pipe 11. A fuel pressure sensor 27 for measuring the pressure of fuel in the common rail 4 is provided in the common rail 4.

A crank sensor 28 is arranged near a crank shaft (not shown) of the diesel engine 1. Rotation of the crank shaft is transmitted to a cam shaft (not shown) by a timing belt. The cam shaft is driven to open and close an intake valve 31 and an exhaust valve 32. The cam shaft rotates once as the crank shaft rotates twice. A cam sensor 29 is arranged near the cam shaft. The crank sensor 28 and the cam sensor 29 are used to measure the number of rotations of the crank shaft per unit time (engine speed NE) and a rotation angle (crank angle CA) of the crank shaft.

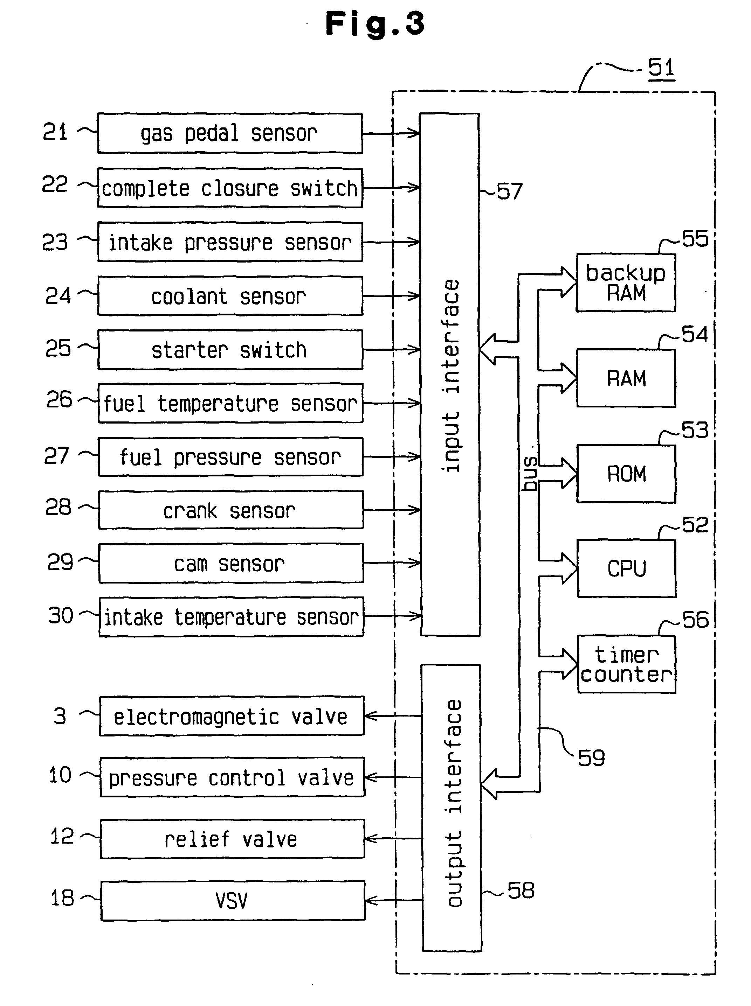

The electronic control unit (ECU) 51 is provided for conducting a various control operations of the diesel engine 1. The electrical construction of the ECU 51 will be described with reference to Fig. 3. The ECU 51 includes a central processing unit (CPU) 52, a read only memory (ROM) 53 for storing a predetermined program and a map, a random access memory (RAM) 54 for temporarily storing computed results of the CPU 52, a backup RAM 55 for storing necessary data when the engine 1 is stopped, and a timer counter 56. The ECU 51 further includes an input interface 57 and an output interface 58, which are connected to the CPU 52, the ROM 53, the RAM 54, the backup RAM 55 and the timer counter 56 with a bus 59.

The gas pedal sensor 21, the intake pressure sensor 23, the coolant sensor 24, the fuel temperature sensor 26, the fuel pressure sensor 27 and the intake temperature sensor 30 are connected to the input interface 57 by a buffer, a multiplexer and a A/D converter (not shown). The crank sensor 28 and the cam sensor 29 are connected to the input interface 57 by a waveform shaping circuit (not shown). The complete closure switch 22 and the starter switch 25 are directly connected to the input interface 57. The CPU 52 reads signals from the sensors 21-30 through the interface 57.

The electromagnetic valve 3, the pressure control valve 10, the relief valve 12 and the VSV 18 are respectively connected to the output interface 58 with a driving circuit (not shown). The CPU 52 appropriately controls the electromagnetic valve 3, the pressure control valve 10, the relief valve 12 and the VSV 18 based on the signals, which are read with the input interface 58.

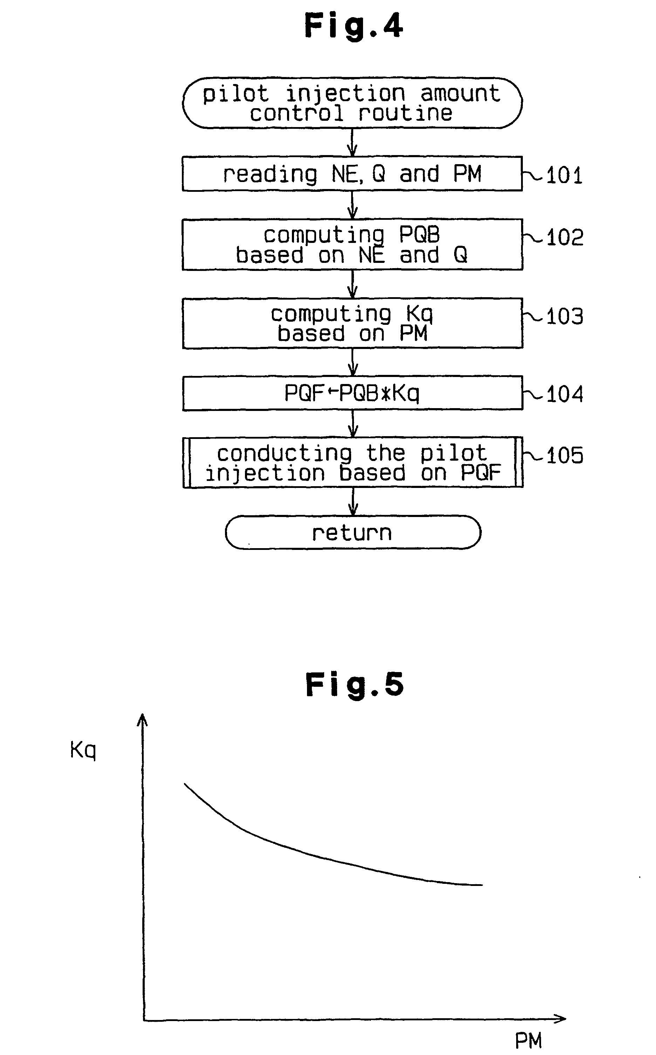

The fuel injection control, especially the pilot injection control, will be described along with various control operations of the ECU 51. Fig. 4 is a flow chart, showing a pilot injection amount control routine performed by the ECU 51. This routine is performed in an interrupting manner at predetermined crank angle CA intervals.

In step 101, the ECU 51 reads the engine speed NE, the target fuel injection amount Q and the intake pressure PM. The target fuel injection amount Q is computed through a different routine based on the running conditions of the engine 1. The target fuel injection amount Q correlates to the load on the engine 1.

Then, in step 102, the ECU 51 computes a basic pilot injection amount PQB based on the currently read engine speed NE and the target fuel injection amount Q. For computing the basic pilot injection amount PQB, a map (not shown) is referred to. This map shows the basic pilot injection amount PQB in relation to the engine speed NE and the target fuel injection amount Q. In this map, for example, as both the engine speed NE and the target fuel injection amount Q (engine load) increase, the basic pilot injection amount PQB decreases.

In step 103, the ECU 51 computes an intake pressure correction factor Kq based on the currently read intake pressure PM. For computing the intake pressure correction factor Kq, a map like that of Fig. 5 is used. In this map, as the intake pressure PM increases, the intake pressure correction factor Kq decreases.

In step 104, the ECU 51 mutiplies the currently computed basic pilot injection amount PQB by the currently computed intake pressure correction factor Kq to obtain the final pilot injection amount PQF.

In step 105, the ECU 51 conducts the pilot injection at a predetermined timing based on the currently computed final pilot injection amount PQF by controlling the electromagnetic valve 3. Then, the ECU 51 stops the routine. After the pilot injection is conducted, the ECU 51 controls the electromagnetic valve 3 to conduct the main injection.

As described above, in the present embodiment not claimed per se, the pilot injection is conducted prior to the main injection, so that the injected fuel is smoothly combusted without the ignition lag. Therefore, explosive combustion of the injected fuel due to the ignition lag and the noise thereof are prevented. Furthermore, the amount of nitrogen oxide (Nox) in the exhaust gas is reduced.

For computing the final pilot injection amount PQF, the intake pressure PM is taken into consideration. More specifically, as the intake pressure PM decreases, the intake pressure correction factor Kq is increased. Therefore, the final pilot injection amount PQF, which is computed based on the intake pressure correction factor Kq and the basic pilot injection amount PQB, is increased. As a result, if the intake pressure PM is relatively low, corresponding to a relatively long ignition lag, the pilot injection amount is increased to prevent the ignition lag.

On the other hand, as the intake pressure PM increases, the intake pressure correction factor Kq decreases. Therefore, the final pilot injection amount PQF, which is computed based on the intake pressure correction factor Kq and the basic pilot injection amount PQB, decreases. As a result, if the intake pressure PM is high enough to prevent the ignition lag, and the pilot injection is not required, the pilot injection amount decreases. This will temper the drawbacks of the pilot injection, which are increased fuel consumption and exhaust gas smoke.

If the gas pedal 15 is abruptly depressed, there is a delay in the response of the turbocharger 91. Therefore, a rise of the actual intake pressure PM is delayed from the time of depressing the gas pedal 15. However, in the present embodiment not claimed per se, the pilot injection amount is changed in accordance with the actual intake pressure PM. Therefore, though the response of the turbocharger is delayed, an amount of fuel corresponding to the actual intake pressure PM is injected during the pilot injection. If the pilot injection amount is changed based on running conditions of the engine 1 other than the intake pressure PM, the amount of fuel injected during the pilot injection may be too much or too little. However, this problem is avoided in the present embodiment not claimed per se.

For example, under low atmospheric pressure such as that at high altitude locations, the intake pressure PM is reduced in comparison to that of normal altitude locations (i.e., places under normal atmospheric pressure). However, in the present embodiment not claimed per se, the pilot injection amount is increased to compensate for the reduced intake pressure PM. Therefore, though the atmospheric pressure may change, the correct amount of fuel is injected during the pilot fuel injection.

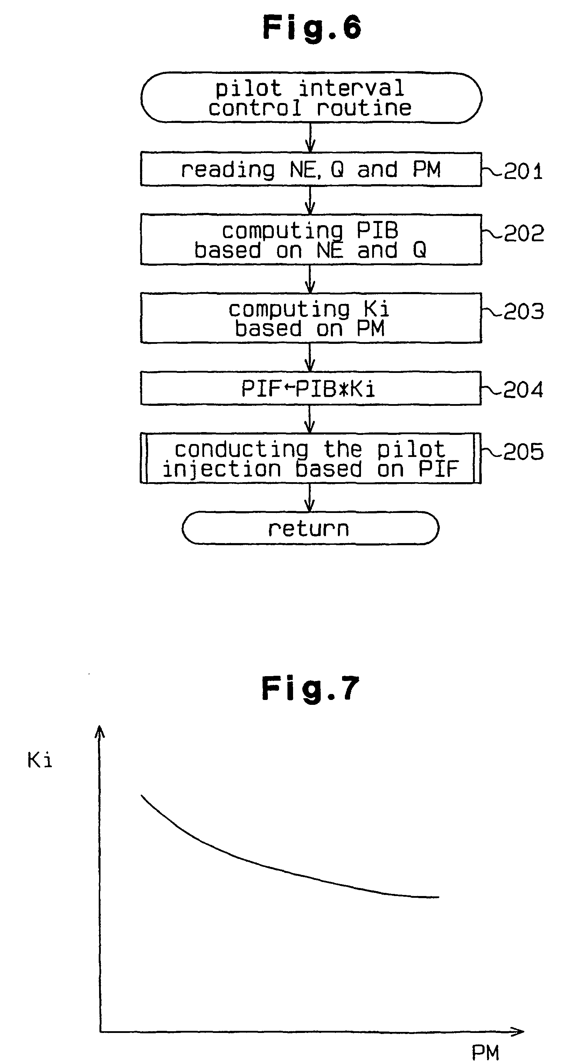

In a second embodiment of Figs. 6 and 7 not claimed per se, instead of changing the amount of fuel to be injected during the pilot injection based on the intake pressure PM, the time interval between the execution time of the pilot injection and the execution time of the main injection is changed based on the intake pressure PM. This time interval will be called the pilot interval. The timing of the main injection is optimized based on the running conditions of the engine 1. The pilot interval is adjusted by changing the execution time of the pilot injection relative to the execution time of the main injection. As the pilot interval increases (i.e., as the execution time of the pilot injection is further ahead of the execution time of the main injection), the effect of the pilot injection increases. On the other hand, as the pilot interval decreases (i.e., as the execution time of the pilot injection becomes closer to the execution time of the main injection), the effect of the pilot injection decreases.

The execution time of the pilot injection and the execution time of the main injection are indicated with a crank angle CA. Therefore, the pilot interval is not indicated in units of time, but by the difference between the crank angle CA at the pilot injection and the crank angle CA at the main injection.

Fig. 6 is a flow chart, showing a pilot interval control routine performed by the ECU 51. This routine is performed in an interrupting manner at predetermined crank angle CA intervals.

In step 201, the ECU 51 reads the engine speed NE, the target fuel injection amount Q and the intake pressure PM, like in step 101 of the flow chart of Fig. 4.

Then, in step 202, the ECU 51 computes the basic pilot interval PIB based on the currently read engine speed NE and the target fuel injection amount Q. For computing the basic pilot interval PIB, a map (not shown) is referred to. This map shows the basic pilot interval PIB in relation to the engine speed NE and the target fuel injection amount Q. In this map, for example, as both the engine speed NE and the target fuel injection amount Q (engine load) increase, the basic pilot interval PIB decreases.

In step 203, the ECU 51 computes an intake pressure correction factor Ki based on the currently read intake pressure PM. For computing the intake pressure correction factor Ki, a map like that of Fig. 7 is referred to. In this map, as the intake pressure PM increases, the intake pressure correction factor Ki decreases.

In step 204, the ECU 51 mutiplies the currently computed basic pilot interval PIB by the currently computed intake pressure correction factor Ki to obtain the final pilot interval PIF.

In step 205, the ECU 51 conducts the pilot injection by controlling the electromagnetic valve 3 based on the currently computed final pilot interval PIF. That is, the pilot injection is conducted at the execution time, which is obtained by subtracting the final pilot interval PIF from the execution time of the main injection, which is obtained in a different routine. The routine stops after step 205. The ECU 51 controls the electromagnetic valve 3 to conduct the main injection after the final pilot interval PIF elapses.

As described above, in the present embodiment not claimed per se, for computing the final pilot interval PIF, the intake pressure PM is taken into consideration. More specifically, as the intake pressure PM decreases, the intake pressure correction factor Ki increases. Therefore, the final pilot interval PIF, which is computed based on the intake pressure correction factor Ki and the basic pilot interval PIB, is increased. As a result, if the intake pressure PM is relatively low, which corresponds to a relatively long ignition lag, the pilot injection is conducted further ahead of the execution time of the main injection, so that the effect of the pilot injection is increased. This will prevent the ignition lag.

On the other hand, as the intake pressure PM increases, the intake pressure correction factor Ki decreases. Therefore, the final pilot interval PIF, which is computed based on the intake pressure correction factor Ki and the basic pilot interval PIB, decreases. As a result, if the intake pressure PM is high enough to prevent the ignition lag, and the pilot injection is not required, the pilot injection is conducted closer to the execution time of the main injection, so that the effect of the pilot injection is reduced. Therefore, the disadvantages of the pilot injection are reduced.

In this embodiment not claimed per se, like in the first embodiment not claimed per se, irrespective of delays in the response of the turbocharger 91 and the changes in the atmospheric pressure, the pilot injection is appropriately conducted with a pilot interval corresponding to the actual intake pressure PM.

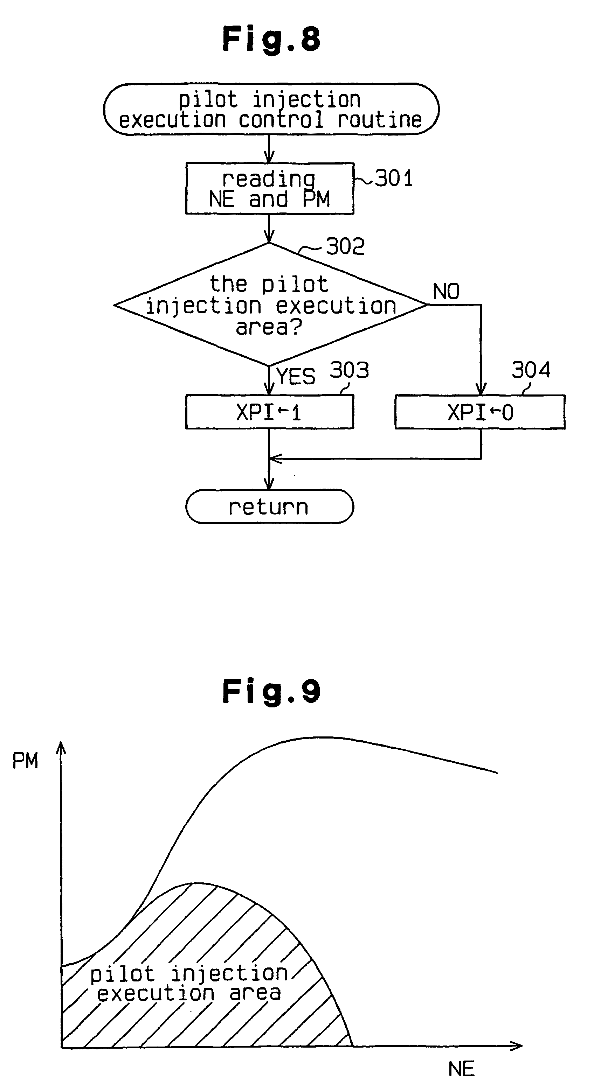

A comparative example not claimed will now be described with reference to Figs. 8 and 9. In the present embodiment, whether or not the pilot injection should be conducted is determined based on the intake pressure PM.

Fig. 8 is a flow chart, showing a pilot injection execution control routine that is conducted by the ECU 51. This routine is performed in an interrupting manner at predetermined crank angle CA intervals.

In step 301, the ECU 51 reads the engine speed NE and the intake pressure PM.

In step 302, the ECU 51 determines whether or not the pilot injection should be conducted based on the currently read engine speed NE and the intake pressure PM. This will be determined by referring to a map like that of Fig. 9. The map shows a pilot injection execution area, in which the pilot injection is conducted, relative to the engine speed NE and the intake pressure PM. If any plotted point, which is defined by both the engine speed NE and the intake pressure PM, is located in the pilot injection execution area of the two dimensional plane of the map of Fig. 9, the pilot injection will be performed. In another words, if the intake pressure PM is lower than a predetermined value, which changes based on the engine speed NE, the pilot injection will be performed. In accordance with this map, if the intake pressure PM is relatively low, and the engine speed NE is also relatively low, the pilot injection will be performed.

If it is determined to conduct pilot injection, the ECU 51 sets an execution flag XPI to "1" in step 303. After step 303, the routine is stopped. Therefore, if the flag XPI is "1", the pilot injection is conducted.

On the other hand, if it is determined not to conduct the pilot injection, the ECU 51 sets the execution flag XPI to "0" in step 304. After step 304, the routine is stopped. Therefore, if the flag XPI is "0", the pilot injection is not conducted, and only the main injection is conducted.

As described above, if the intake pressure PM for a given engine speed NE is smaller than a predetermined value, execution of the pilot injection is allowed. Therefore, if the intake pressure PM is low, which corresponds to a long ignition lag, the pilot injection is conducted, and ignition lag is prevented.

On the other hand, if the intake pressure PM for respective engine speed NE is larger than a predetermined value, the pilot injection is not conducted. Therefore, if the intake pressure is high enough to prevent occurrence of the ignition lag, the pilot injection is not conducted, and the disadvantages of the pilot injection will be prevented.

In the comparative example of Figs 8 and 9, like in the first and second embodiments claimed in combination irrespective of delays in the response of the turbocharger 91 and the changes in the atmospheric pressure, whether or not the pilot injection is conducted is determined based on the actual intake pressure PM.

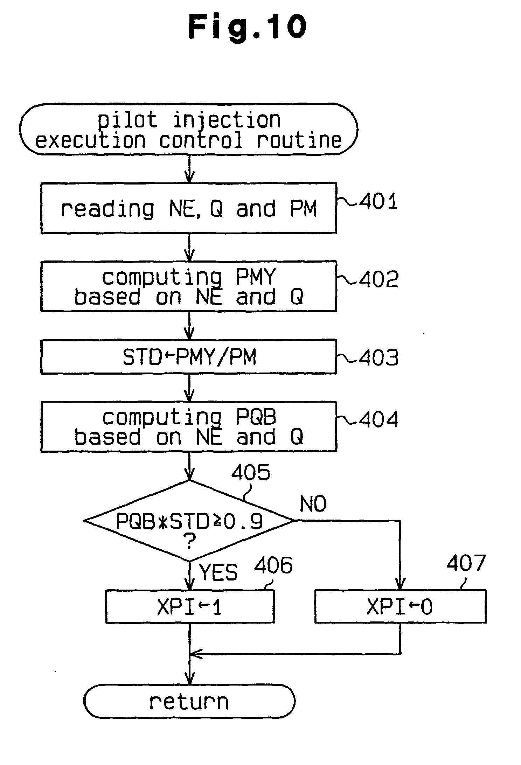

A further comparative example not claimed will now be described with reference to Figs. 10 to 12. Since the further comparative example is a modification of the former comparative example, differences will be mainly described.

Fig. 10 is a flow chart, showing a pilot injection execution control routine that is conducted by the ECU 51. This routine is conducted at predetermined crank angle CA intervals in an interrupting manner.

In step 401, the ECU 51 reads the engine speed NE, the target fuel injection amount Q, which is computed through a different routine, and the intake pressure PM.

In step 402, the ECU 51 computes an estimated intake pressure PMY based on the currently read engine speed NE and the target fuel injection amount Q. Unlike the actually measured intake pressure PM, the estimated intake pressure PMY is computed by referring to a map (not shown), which shows the estimated intake pressure PM relative to the engine speed NE and the target fuel injection amount Q. This map is empirically derived by assuming that the engine is operating at places under normal atmospheric pressure.

In step 403, the ECU 51 computes the ratio of the estimated intake pressure PMY to the currently read actual intake pressure PM, as an intake pressure ratio STD.

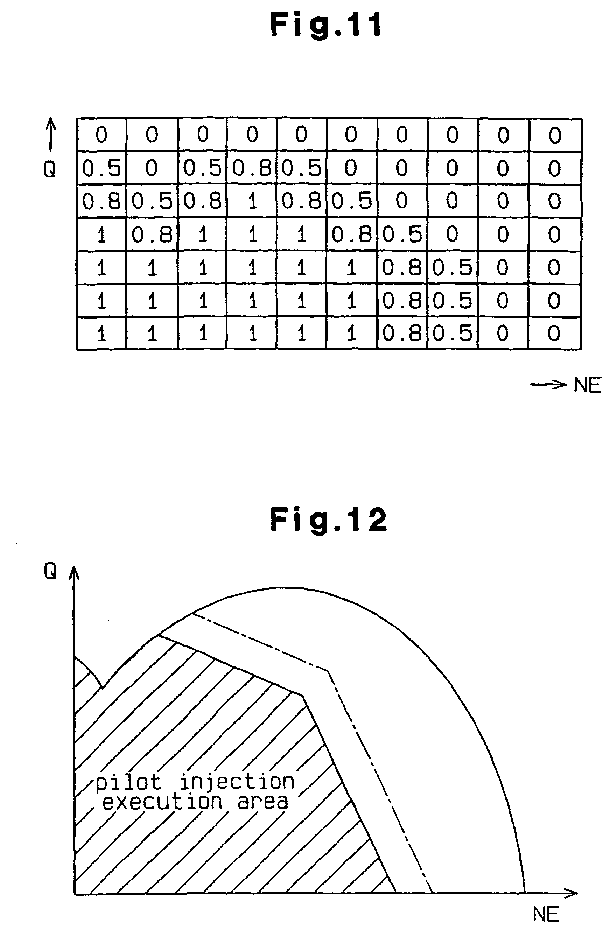

In step 404, the ECU 51 computes the basic pilot injection amount PQB based on the currently read engine speed NE and the target fuel injection amount Q. For computing the basic pilot injection amount PQB, a map like that of Fig. 11 is referred to. According to the map of Fig. 11, if the engine speed NE and the target fuel injection amount Q are relatively low, the basic pilot injection amount PQB is set to, for example, "one". As the engine speed NE and the target fuel injection amount Q increase, the basic injection amount PQB will approach "zero".

Then, in step 405, the ECU 51 determines whether or not the result of multiplying the currently computed basic pilot injection amount PQB by the intake pressure ratio STD is equal to or greater than a predetermined reference value (in the present embodiment, the reference value is, for example, 0.9). If the result of the multiplication is equal to or greater than the reference value, the ECU 51 proceeds to step 406. Then, the ECU 51 sets the execution flag XPI to "1" and terminates further procedure. Therefore, in this situation, the pilot injection is conducted. If the result of the multiplication is below the reference value, the ECU 51 proceeds to step 407. Then, the ECU 51 sets the execution flag to "0" and terminates the routine. Therefore, in this situation, the pilot injection is not conducted, and only the main injection is conducted.

As described above, in accordance with Figs. 10-12, whether or not the pilot injection is conducted is determined based on the intake pressure ratio STD and the basic pilot injection amount PQB, which is determined based on the engine speed NE and the target fuel injection amount Q.

Under low atmospheric pressure, like that in high altitude locations, the intake pressure PM is decreased. In accordance with the present embodiment, under such conditions, the intake pressure ratio STD is increased to compensate for the decreased intake pressure PM. Therefore, though the basic pilot injection amount PQB is below the reference value, it could happen that the result of multiplying the basic pilot injection amount PQB by the intake pressure ratio STD becomes equal to or greater than the reference value. In another words, in the situation, wherein the pilot injection is not conducted unless the intake pressure ratio STD is considered, the pilot injection could be conducted by taking the intake pressure ratio STD into consideration. A graph of Fig. 12 shows a pilot injection execution area, in which the pilot injection is conducted, relative to the engine speed NE and the target fuel injection amount Q. The shaded area is the pilot injection execution area, which does not take the intake pressure ratio STD into consideration. By taking the intake pressure ratio STD into consideration, the pilot injection execution area can be increased to the larger area indicated with a two-dot chain line. If the intake pressure ratio STD is smaller than one, the pilot injection execution area will be smaller than the shaded area. Therefore, whether or not the pilot fuel injection is conducted is appropriately determined in accordance with atmospheric pressure changes.

In the further comparative example Figs. 10-12, whether or not the pilot injection is conducted is determined in consideration of the target fuel injection amount Q (which corresponds to the engine load), the intake pressure PM and the engine speed NE. Therefore, the pilot injection is more precise in comparison to the other comparative example.

The present invention is not limited to the illustrated embodiments, and the illustrated embodiments can be modified as follows without departing from the scope of the invention defined in the claims.

According to the present invention as claimed, the first embodiment of Fig. 4 and the second embodiment of Fig. 6 are integrated to change both the pilot injection amount and the pilot interval based on the intake pressure PM.

The present invention can be applied to supercharged engines having a supercharger other than the turbocharger 91, such as a supercharger rotated by engine torque. Also, the present invention can be applied to engines without a supercharger.

Although the engine 1 of Fig. 1 includes the common rail 4, the present invention can be applied to engines without a common rail. In another words, the present invention can be applied to any engine that conducts the pilot injection. Therefore, the injector 2 does not necessarily have to include the construction of Figs. 2(a)-2(c).

The intake pressure PM can be indirectly obtained based on the running conditions of the engine. In this instance, it is desirable to take rapid changes in the gas pedal depression amount ACCP and the response delay of the turbocharger 91 into consideration. For example, in the third embodiment of Fig. 8, if the gas pedal depression amount ACCP is abruptly increased while the pilot injection is being conducted, the pilot injection can be continued until a predetermined period of time (corresponding to the delay in the response of the turbocharger 91) elapses.

A pilot injection control apparatus for a diesel engine. An injector (2) injects fuel into a combustion chamber of the engine. An electronic control unit (ECU) (51) controls the injector (2) to conduct a pilot injection of fuel prior to a main injection of fuel. The ECU (51) controls the injector (2) to increase the effect of the pilot injection as the intake air pressure (PM) decreases. For example, the ECU (51) increases the amount (PQF) of fuel to be injected during the pilot injection as the intake pressure (PM) decreases. Therefore, the pilot injection is conducted in accordance with the intake pressure (PM).

## Claims

1. A fuel injection control apparatus for an engine, the apparatus comprising an injector (2) for injecting fuel into a combustion chamber of the engine and a control means (51) for controlling the injector (2) to conduct pilot injection of fuel prior to a main injection of fuel, the apparatus being
**characterized in that**
the control means (51) controls the injector (2) to increase an amount (PQF) of fuel to be injected during the pilot injection as the intake pressure (PM)of air that is supplied into the combustion chamber decreases and controls the injector (2) to lengthen a time interval (PIF) between the execution time of the pilot injection and the execution time of the main injection as the intake pressure (PM) of air that is supplied into the combustion chamber decreases.

2. An apparatus according to claim 1,
**characterized in that**
the control means (51) changes the execution time of the pilot injection relative to the execution time of the main injection based on the intake pressure (PM).

3. An apparatus according to claim 1,
**characterized in that**
the control means (51) controls the injector (2) to conduct the pilot injection only when the intake pressure (PM) is less than a predetermined value.

4. An apparatus according to claim 3,
**characterized in that**
said predetermined value is changed in accordance with the engine speed (NE).

5. An apparatus according to any one of claims 1 to 4,
**characterized by**
a detector (23) for directly measuring the intake pressure (PM).

6. An apparatus according to any one of claims 1 to 5,
**characterized by**
a supercharger (91) for supercharging the intake air.

7. An apparatus according to any one of claims 1 to 6,
**characterized in that**
a basic pilot injection amount (PQB) or a basic pilot interval (PIB) is computed based on the engine speed (NE) and the engine load (Q).

## Patentansprüche

1. Kraftstoffeinspritzsteuergerät für eine Kraftmaschine, wobei das Gerät eine Einspritzvorrichtung (2) zum Einspritzen von Kraftstoff in eine Brennkammer der Kraftmaschine sowie eine Steuereinrichtung (51) zum Steuern der Einspritzvorrichtung (2) aufweist, um eine Voreinspritzung von Kraftstoff vor einer Haupteinspritzung von Kraftstoff durchzuführen, und das Gerät ist
**dadurch gekennzeichnet, dass**
die Steuereinrichtung (51) die Einspritzvorrichtung (2) zum Vermehren einer Menge (PQF) des während der Voreinspritzung einzuspritzenden Kraftstoffes steuert, wenn sich der Einlassdruck (PM) von Luft verringert, die der Brennkammer zugeführt wird, und dass sie die Einspritzvorrichtung (2) zum Verlängern eines Zeitintervalls (PIF) zwischen der Ausführungszeit der Voreinspritzung und der Ausführungszeit der Haupteinspritzung steuert, wenn sich der Einlassdruck (PM) von Luft verringert, die der Brennkammer zugeführt wird.

2. Gerät gemäß Anspruch 1,
**dadurch gekennzeichnet, dass**
die Steuereinrichtung (51) die Ausführungszeit der Voreinspritzung bezüglich der Ausführungszeit der Haupteinspritzung auf der Grundlage des Einlassdruckes (PM) ändert.

3. Gerät gemäß Anspruch 1,
**dadurch gekennzeichnet, dass**
die Steuereinrichtung (51) die Einspritzvorrichtung (2) zum Durchführen der Voreinspritzung ausschließlich dann steuert, wenn der Einlassdruck (PM) kleiner ist als ein vorbestimmter Wert.

4. Gerät gemäß Anspruch 3,
**dadurch gekennzeichnet, dass**
der vorbestimmte Wert gemäß der Kraftmaschinendrehzahl (NE) geändert wird.

5. Gerät gemäß einem der Ansprüche 1 bis 4,
**gekennzeichnet durch**
eine Erfassungsvorrichtung (23) zum direkten Messen des Einlassdruckes (PM).

6. Gerät gemäß einem der Ansprüche 1 bis 5,
**gekennzeichnet durch**
eine Ladevorrichtung (91) zum Laden der Einlassluft.

7. Gerät gemäß einem der Ansprüche 1 bis 6,
**dadurch gekennzeichnet, dass**
eine Grund-Voreinspritzmenge (PQB) oder ein Grund-Vorintervall (PIB) auf der Grundlage der Kraftmaschinendrehzahl (NE) und der Kraftmaschinenlast (Q) berechnet wird.

## Revendications

1. Dispositif de commande d'injection de carburant destiné à un moteur, le dispositif comprenant un injecteur (2) destiné à injecter le carburant dans une chambre de combustion du moteur et un moyen de commande (51) destiné à commander l'injecteur (2) afin d'exécuter une injection pilote de carburant avant une injection principale de carburant, le dispositif étant
**caractérisé en ce que**
le moyen de commande (51) commande l'injecteur (2) pour augmenter une quantité (PQF) de carburant à injecter au cours de l'injection pilote lorsque la pression d'admission (PM) d'air, qui est fourni dans la chambre de combustion, diminue et commande l'injecteur (2) pour allonger un intervalle de temps (PIF) entre l'instant d'exécution de l'injection pilote et l'instant d'exécution de l'injection principale lorsque la pression d'admission (PM) de l'air qui est fourni dans la chambre de combustion diminue.

2. Dispositif selon la revendication 1,
**caractérisé en ce que**
le moyen de commande (51) modifie l'instant d'exécution de l'injection pilote par rapport à l'instant d'exécution de l'injection principale sur la base de la pression d'admission (PM).

3. Dispositif selon la revendication 1,
**caractérisé en ce que**
le moyen de commande (51) commande l'injecteur (2) pour n'exécuter l'injection pilote que lorsque la pression d'admission (PM) est inférieure à une valeur prédéterminée.

4. Dispositif selon la revendication 3,
**caractérisé en ce que**
ladite valeur prédéterminée est modifiée en fonction du régime du moteur (NE).

5. Dispositif selon l'une quelconque des revendications 1 à 4,
**caractérisé par**
un détecteur (23) destiné à mesurer directement la pression d'admission (PM).

6. Dispositif selon l'une quelconque des revendications 1 à 5,
**caractérisé par**
un turbocompresseur (91) destiné à turbocomprimer l'air d'admission.

7. Dispositif selon l'une quelconque des revendications 1 à 6,
**caractérisé en ce que**
une quantité d'injection pilote élémentaire (PQB) ou un intervalle pilote élémentaire (PIB) est calculé sur la base du régime du moteur (NE) et de la charge du moteur (Q).
